# EUROPÄISCHE PATENTSCHRIFT

(11) **EP 2 550 159 B1**
(45) Veröffentlichungstag und Bekanntmachung des Hinweises auf die Patenterteilung: **10.07.2013**
(21) Anmeldenummer: 11711499.1
(22) Anmeldetag: 23.03.2011
(51) Int. Cl.: B32B 5/00

(54) **SCHÄUME UND FORMTEILE AUS TRÄGERMATERIALIEN ENTHALTEND SCHÄUMFÄHIGE REAKTIVHARZE**
FOAMS AND MOLDED PARTS MADE OF SUPPORTING MATERIALS THAT CONTAIN FOAMING REACTIVE RESINS
MOUSSES ET PIÈCES MOULÉES EN MATIÈRES DE BASE CONTENANT DES RÉSINES RÉACTIVES EXPANSIBLES

(30) Priorität: 25.03.2010 EP 10157726
(43) Veröffentlichungstag der Anmeldung: 30.01.2013
(73) Patentinhaber: BASF SE, 67056 Ludwigshafen (DE)
(72) Erfinder: STEINKE, Tobias, Heinz, 67346 Speyer (DE); BAUMGARTL, Horst, 67063 Ludwigshafen (DE); HAHN, Klaus, 67281 Kirchheim (DE); SCHIERHOLZ, Jens-Uwe, 64625 Bensheim (DE); WESTER, Bettina, 67133 Maxdorf (DE); MÖCK, Christof, 68259 Mannheim (DE); VATH, Bernhard, 68259 Mannheim (DE); NESSEL, Peter, 67067 Ludwigshafen (DE); LENZ, Werner, 67059 Ludwigshafen (DE); GONZALES, Denis, Alfred, B-1150 Brüssel (BE); DE LEERSNYDER, Geert, B-8710 Wielsbeke (BE)
(86) Internationale Anmeldenummer: PCT/EP2011/054390
(87) Internationale Veröffentlichungsnummer: WO 2011/117269

(56) Entgegenhaltungen:
- EP-A1- 1 010 793
- WO-A1-00/71343
- US-A1- 2004 142 176
- US-A1- 2005 158 554
- US-A1- 2008 161 430
- US-A1- 2008 161 432

## Beschreibung

Die vorliegende Erfindung betrifft Schäume und Formteil aus Trägermaterialien enthaltend schäumfähige Melamin-/Formaldehydharze.

Aus der WO-A-2009/77616 sind Formteile bekannt, bei denen die Trägermaterialien beispielsweise aus offenzelligen Schäumen, wie offenzellige Melaminharzschäume, PIR (Polyisocyanurat), Polyimid-Schäume oder Schäumen auf der Basis anorganischer Materialien bestehen. Insbesondere sind daraus Formteile bekannt, bei denen das Trägermaterial ein Melaminharzschaum ist und das schaumfähige Reaktivharz ein Polyurethanharz, ein Polyesterharz oder ein Epoxidharz ist.

Derartige Formteile lassen jedoch noch zu wünschen übrig.

Der vorliegenden Erfindung lag daher die Aufgabe zugrunde, den zuvor genannten Nachteilen abzuhelfen.

Demgemäß wurden neue Schäume und Formteile aus geschäumten Trägermaterialien ausgewählt aus der Gruppe bestehend aus Polyurethanharzen, Polyesterharzen, Epoxiden oder deren Gemischen enthaltend als schäumfähiges Reaktivharz Melamin/- Formaldehydharze gefunden.

Das Gewichtsverhältnis von Trägermaterial zum schaumfähigen Reaktivharz beträgt in der Regel 1 bis 50 Gew.%, bevorzugt 5 bis 30 Gew.%, insbesondere 10 bis 20 Gew.-%.

Als Trägermaterialien der erfindungsgemäßen Schäume und Formteile eignen sich prinzipiell alle dem Fachmann bekannten räumlichen und flächigen Materialien, die als Träger, Matrix oder Grundgerüst verwendet werden können. Sie können prinzipiell in beliebigen Formen oder Dicken angeordnet sein. Vorzugsweise verwendet man flächige Trägermaterialen, die plattenförmig angeordnet sind, wobei die dritte Dimension (Dicke) kleiner ist als die erste (Länge) und zweite (Breite) Dimension des flächigen Trägermaterials. Die Länge und die Breite des flächigen Trägermaterials können gleich oder unterschiedlich sein.

Vorzugsweise sind die Trägermaterialien ausgewählt aus mindestens einem (schäumfähigen) Polyurethanharz (PU-Harz), (schäumfähigen) Polyesterharz oder (schäumfähigen) Epoxidharz. Insbesondere ist das Trägermaterial ein Polyurethanharz. Geeignete Polyurethanharze, Polyesterharze oder Epoxidharze sind dem Fachmann bekannt.

Solche Harze sind beispielsweise in Encyclopedia of Polymer Science and Technology (Wiley) unter folgenden Kapiteln zu finden: a) Polyesters, unsaturated: Edition 3, Vol. 11, 2004, S. 41-64; b) Polyurethanes: Edition 3, Vol. 4, 2003, S. 26-72 und c) Epoxy resins: Edition 3, Vol. 9, 2004, S. 678-804. Des Weiteren finden sich in Ullmann's Encyclopedia of Industrial Chemistry (Wiley) folgende Kapitel: a) Polyester resins, unsaturated: Edition 6, Vol.28, 2003, S. 65-74; b) Polyurethanes: Edition 6, Vol.28, 2003, S. 667-722 und c) Epoxy resins: Edition 6, Vol.12, 2003, S. 285-303.

Unter Polyurethanharzen werden im Rahmen der vorliegenden Erfindung insbesondere Harze auf der Basis von Polyurethan verstanden. Sie werden überwiegend aus Lufttrocknenden Ölen (Triglyceride, ungesättigte Fettsäuren) gewonnen, die zunächst mit Glycerol zu einer Mischung aus Mono- und Diglyceriden umgeestert werden. Die resultierenden Produkte werden anschließend mit Diisocyanaten, bevorzugt Diisocyanatotoluolen, bei einem Stoffmengenverhältnis von Isocyanat- : Hydroxy-Gruppen ≤ 1 : 1 zu Polyurethanen umgesetzt, die keine Isocyanat-Gruppen mehr enthalten und ähnlich wie Alkydharze durch Luftoxidation trocknen und aushärten. Sie können alternativ hergestellt werden aus mit ungesättigten Säuren (z.B. mit Tallöl) partiell veresterten Polyalkoholen (Glycerol, Pentaerythritol) und Diisocyanaten.

Unter Polyesterharzen werden im Rahmen der vorliegenden Erfindung vorzugsweise ungesättigte Polyesterharze verstanden. Insbesondere handelt es sich bei den Polyesterharzen um Reaktionsharze auf der Basis von ungesättigten Polyestern, hergestellt aus ungesättigten Dicarbonsäuren, wie Malein- oder Fumarsäure, und vorwiegend 2-wertigen Alkoholen, wie Ethylenglycol und Propan-1,2-diol, die bei der Anwendung unter Polymerisation und Vernetzung zu duroplastischen Massen aushärten. Bei ihrer Herstellung können als zusätzliche Komponenten copolymerisierbare Monomere (Styrol, α-Methylstyrol, Vinyltoluol, Methylmethacrylat und andere) als Lösemittel oder Verdünnungsmittel, bifunktionelle Monomere (z.B. Divinylbenzol, Diallylphthalat) als Vernetzer und Härter (Initiatoren der Polymerisation, z.B. Peroxide), Beschleuniger, Pigmente, Weichmacher, Antistatika, Füllstoffe und Verstärkungsstoffe (Fasern auf anorganischer oder organischer Basis) eingesetzt werden.

Unter Epoxidharzen werden im Rahmen der vorliegenden Erfindung vorzugsweise sowohl oligomere Verbindungen mit mehr als einer Epoxid-Gruppe pro Molekül, die zur Herstellung von Duroplasten eingesetzt werden, als auch die entsprechenden Duroplasten selber verstanden. Die Umwandlung der Epoxidharze in Duroplaste erfolgt über Polyadditionsreaktionen mit geeigneten Härtern bzw. durch Polymerisation über die Epoxid-Gruppen. Vorzugsweise erfolgt die Herstellung von Epoxid-Harzen durch Umsetzung von Bisphenol A (aromatische Dihydroxy-Verbindungen) mit Epichlorhydrin im alkalischen Milieu zu kettenförmigen Verbindungen.

Die polymeren Schaumstoffe sind bevorzugt offenzellig. Hierzu werden die herkömmlichen, geschlossenzelligen Schaumstoffe nachträglich behandelt/retikuliert.

Die sogenannte Retikulierung ist ein Verfahren, mit dem die Zellhäute eines Schaumstoffes nahezu vollständig entfernt werden, so dass der Schaumstoff eine fast perfekte Offenzelligkeit erhält.

Die Retikulierung wird in einer Stahlkammer durchgeführt, wo entweder ganze Schaumstoffblöcke oder in speziellen Rollenreaktoren - Rollen mit ca. 1 m Durchmesser eingeschlossen werden. Dann wird die Luft abgepumpt und durch ein Brenngasgemisch ersetzt. Durch die Zündung des Gasgemisches bewirkt die entstehende Hitze-und Druckwelle, dass die dünnsten Gebilde im Schaum, also die Zell häute, zerreißen und auf die Zellstege aufschmelzen, so dass diese dicker werden. Durch die Retikulierung wird die Stauchhärte des Schaumblockes um ca. 20% vermindert, die Zugfestigkeits- und Dehnungswerte steigen dagegen an.

Die Retikulierung erzeugt eine hohe Blockinnentemperatur, ähnlich wie nach der Schäumung. Es ist daher auch nach dem Retikulieren eine Abkühlzeit notwendig. Retikulierte Schäume weisen eine nahezu 100 %ige Offenzelligkeit auf und haben daher einen minimalen Durchströmungswiderstand für Gase oder Flüssigkeiten. Die häufigste Anwendung sind Filter aller Art. Mit Hilfe des Verfahrens der Retikulation wird der ausgewählte Schaum bei der vorliegenden Erfindung dadurch veredelt, dass dessen Poren auf eine Größe von pores per inch ppi 20-40 aufgeweitet werden.

Alternativ oder zusätzlich zum Verfahren der Retikulation besteht die Möglichkeit, die Dichte des Schaumes dadurch zu verringern, dass durch die mechanische Bearbeitung neben den ohnehin in dem Schaum vorhandenen Poren zusätzliche Löcher oder Aussparungen in den Schaum eingebracht werden.

Als weitere Trägermaterialien eignen sich mineralische Fasern (z. B. Glas, Mineralwolle, Basalt), tierische Fasern (z. B. Seide, Wolle) pflanzliche Fasern (z. B. Baumwolle), chemischen Fasern aus natürlichen Polymeren (z. B. Cellulose) und chemische Fasern aus synthetischen Polymeren (wie Polyamid (PA 6.6 - Markenbezeichnung Nylon, PA 6.0 - Markenbezeichnung Perlon) Polyester (PET (Polyethylenterephthalat), PBT (Polybutylenterephthalat), PVC (Polyvinylchlorid), PP (Polypropylen), PE (Polyethylen), PPS (Polyphenylensulfid), PAN (Polyacrylnitril), PI (Polyimid), PTFE (Polytetraflourethylen, Teflon), Aramide (meta-Aramid, Markenbezeichnung z. B. Nomex, para-Aramid, Markenbezeichnung z. B. Kevlar) Polyamidimid (Kermel). (Ullmann's Encyclopedia of Industrial Chemistry, Kap. 13, Fibers, 2003, Seite 323 bis 652).

Bevorzugt werden Vliesstoffe (nonwovens) und Gewebematerialien (wovens) sowie zwei- und dreidimensionale, offenzellige Netzwerke bestehend aus den oben genannten Fasern verwendet.

Als Trägermaterialien können auch Fasergemische aus den oben genannten Fasern eingesetzt werden. Es können auch mehrschichtige Gelege aus werkstofflich gleichartigen Fasern mit unterschiedlicher Dichte bzw. Flächengewichte eingesetzt werden. Ebenso können mehrschichtige Gelege aus verschiedenartigen Fasern gleicher Dichte oder unterschiedlicher Dichte resp. gleicher oder unterschiedlicher Dicke verwendet werden.

Aus Trägermaterialien enthaltend schäumfähige Reaktivharze hergestellte Schäume werden auch als Hybridschäume bezeichnet. Gegebenenfalls können auch zwei oder mehrere unterschiedliche schäumfähige Reaktivharze in das Trägermaterial eingebracht werden.

Als schaumfähiges Reaktivharz eignen sich Melamin-Formaldehydharze, besonders bevorzugt Melamin-/Formaldehydharze, die zu einem offenzelligen Schaum mit einer Dichte von ≤ 25 g/l, also 1,6 bis 25 g/l, bevorzugt 2 bis 15 g/l, besonders bevorzugt 3 bis 23 g/l, insbesondere 4 bis 12 g/l und/oder einer Porengröße zwischen 10 und 1000 µm, bevorzugt 50 und 300 µm führt.

Herstellverfahren für Melamin-/Formaldehydharze und deren Schäume sind beispielsweise aus WO-A-01/94436 bekannt.

Die erfindungsgemäßen Schäume und Formteile lassen sich wie folgt herstellen:
1. Herstellen einer Lösung oder Dispersion enthaltend ein Vorkondensat des herzustellenden Schaumstoffs und gegebenenfalls weitere Zusatzkomponenten (Z),
2. Einbringen des schaumfähigen Melamin/Formaldehydharzes in ein Trägermaterial
3. Aufschäumen des Vorkondensates im Trägermaterial durch Erhitzen der Lösung oder Dispersion aus Schritt (2) auf eine Temperatur oberhalb der Siedetemperatur des Treibmittels, um einen Schaumstoff zu erhalten, sowie gegebenenfalls vorzugsweise
4. Trocknung des in Schritt (3) erhaltenen Schaumstoffes.

Die einzelnen Verfahrensschritte und die verschiedenen Variationsmöglichkeiten werden nachfolgend näher ausgeführt.

Die Melamin-Formaldehyd-Vorkondensate weisen in der Regel ein Molverhältnis von Formaldehyd zu Melamin 5 : 1 bis 1,3 : 1, bevorzugt 3,5 : 1 bis 1,5 : 1 auf.

Diese Melamin/Formaldehyd-Kondensationsprodukte können neben Melamin bis zu 50 Gew.-%, vorzugsweise bis zu 20 Gew.-%, anderer Duroplastbildner und neben Formaldehyd bis zu 50 Gew.-%, vorzugsweise bis 20 Gew.-% anderer Aldehyde ein kondensiert enthalten. Bevorzugt ist jedoch ein unmodifiziertes Melamin/Formaldehyd-Kondensationsprodukt.

Als Duroplastbildner können beispielsweise Alkyl- und Arylsubstituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate eingesetzt werden.

Als Aldehyde können zum Beispiel Acetaldehyd, Trimethylolacetaldehyd, Acrolein, Benzaldehyd, Furfural, Glyoxal, Glutaraldehyd, Phthalaldehyd und Terephthalaldehyd eingesetzt werden. Weitere Einzelheiten über Melamin/Formaldehyd-Kondensationsprodukte finden sich in Houben-Weyl, Methoden der organischen Chemie, Band 14/2, 1963, Seiten 319 bis 402.

In einer weiteren bevorzugten Ausführungsform liegt das Melamin-/Formaldehyd-Vorkondensat in der Mischung in einer Menge von 55 bis 85 Gew.-%, bevorzugt von 63 bis 80 Gew.-% vor.

Es können bei der Herstellung des Melamin-/Formaldehyd-Vorkondensates Alkohole, beispielsweise Methanol, Ethanol oder Butanol zugesetzt werden, um teilweise oder vollständig veretherte Kondensate zu erhalten. Durch die Bildung der Ethergruppen können die Löslichkeit des Melamin-/Formaldehyd-Vorkondensates und die mechanischen Eigenschaften des vollständig ausgehärteten Materials beeinflusst werden.

Als Dispergiermittel bzw. Emulgator können anionische, kationische und nicht ionische Tenside sowie Mischungen davon eingesetzt werden.

Geeignete anionische Tenside sind beispielsweise Diphenylenoxidsulfonate, Alkan-und Alkylbenzolsulfonate, Alkylnaphthalinsulfonate, Olefinsulfonate, Alkylethersulfonate, Fettalkohol-sulfate, Ethersulfate, a-Sulfofettsäureester, Acylaminoalkansulfonate, Acylisothionate, Alkylethercarboxylate, N-Acylsarcosinate, Alkyl- und Alkyletherphosphate. Als nicht ionische Tenside können Alkylphenolpolyglykolether, Fettalkoholpolyglykolether, Fettsäurepolyglykol-ether, Fettsäurealkanolamide, Ethylenoxid/Propylenoxid-Blockcopolymere, Aminoxide, Glycerin-fettsäureester, Sorbitanester und Alkylpolyglykoside verwendet werden. Als kationische Emulgatoren können z.B. Alkyltriammoniumsalze, Alkylbenzyldimethylammoniumsalze und Alkylpyridiniumsalze eingesetzt werden.

Die Dispergiermittel bzw. Emulgatoren können in Mengen von 0,2 bis 5 Gew.-%, bezogen auf das Melamin-/Formaldehyd-Vorkondensat eingesetzt.

Die Dispergiermittel bzw. Emulgatoren und/oder Schutzkolloide können im Prinzip zu einem beliebigen Zeitpunkt zur Rohdispersion gegeben werden, sie können jedoch auch bereits in dem Lösungsmittel bei Einbringung der Mikrokapsel-Dispersion vorhanden sein.

Als Härter können saure (acide) Verbindungen eingesetzt werden, die die Weiterkondensation des Melaminharzes katalysieren. Die Menge dieser Härter beträgt in der Regel 0,01 bis 20 Gew.-%, bevorzugt 0,05 und 5 Gew.-%, jeweils bezogen auf das Vorkondensat. Geeignete saure Verbindungen sind anorganische und organische Säuren, zum Beispiel ausgewählt aus der Gruppe bestehend aus Salzsäure, Schwefelsäure, Phosphorsäure, Salpetersäure, Ameisensäure, Essigsäure, Oxalsäure, Toluolsulfonsäuren, Amidosulfonsäuren, Säureanhydride und Mischungen davon.

Abhängig von der Wahl des Melamin-/Formaldehyd-Vorkondensates enthält die Mischung ein Treibmittel. Dabei richtet sich die Menge des Treibmittels in der Mischung in der Regel nach der erwünschten Dichte des Schaumstoffs.

Prinzipiell können bei dem erfindungsgemäßen Verfahren sowohl physikalische als auch chemische Treibmittel verwendet werden (Encyclopedia of Polymer Science and Technology, Vol. I, 3. Aufl., Kapitel Additives, Seite 203 bis 218, 2003).

Als Treibmittel eignen sich "physikalische" oder "chemische" Treibmittel. Unter "physikalischen" Treibmitteln werden hier flüchtige Flüssigkeiten oder komprimierte Gase verstanden, die ihre Eigenschaft als Treibmittel durch physikalische Behandlung erhalten (z.B. Temperatur, Druck). Unter "chemischen" Treibmitteln werden hier solche Treibmittel verstanden, die ihre Eigenschaft als Treibmittel durch chemische Reaktion oder chemische Zersetzung unter Gasfreisetzung erhalten.

Als "physikalische" Treibmittel eignen sich, beispielsweise Kohlenwasserstoffe, wie Pentan, Hexan, halogenierte, insbesondere chlorierte und/oder fluorierte Kohlenwasserstoffe, beispielsweise Methylenchlorid, Chloroform, Trichlorethan, Fluorchlorkohlenwasserstoffe, teilhalogenierte Fluorchlorkohlenwasserstoffe (H-FCKW), Alkohole, beispielsweise Methanol, Ethanol, n- oder iso-Propanol, Ether, Ketone und Ester, beispielsweise Ameisensäuremethylester, Ameisensäureethylester, Essigsäuremethylester oder Essigsäureethylester, in flüssiger Form oder Luft, Stickstoff und Kohlendioxid als Gase.

Als "chemische" Treibmittel eignen sich, beispielsweise Isocyanate im Gemisch mit Wasser, wobei als wirksames Treibmittel Kohlendioxid freigesetzt wird. Ferner sind Carbonate und Bicarbonate im Gemisch mit Säuren geeignet, welche ebenfalls Kohlendioxid erzeugen. Auch geeignet sind Azoverbindungen, wie z.B. Azodicarbonamid.

In einer bevorzugten Ausführungsform der Erfindung enthält die Mischung zusätzlich wenigstens ein Treibmittel. Dieses Treibmittel liegt in der Mischung in einer Menge von 0,5 bis 60 Gew.-%, bevorzugt 1 bis 40 Gew.-%, besonders bevorzugt 1,5 bis 30 Gew.-% bezogen auf das Melamin-/Formaldehyd-Vorkondensat, vor. Es wird bevorzugt ein physikalisches Treibmittel mit einem Siedepunkt zwischen 0 und 80°C zugesetzt.

In einer weiteren Ausführungsform enthält die Mischung neben dem Melamin-/Formaldehyd-Vorkondensat des herzustellenden Schaumstoffes und den Nanopartikeln, auch einen Emulgator sowie gegebenenfalls einen Härter und gegebenenfalls ein Treibmittel.

In einer weiteren Ausführungsform ist die Mischung frei von weiteren Zusatzstoffen. Für manche Zwecke kann es jedoch günstig sein, 0,1 bis 20 Gew.-%, bevorzugt 0,1 bis 10 Gew.%, bezogen auf das Melamin-/Formaldehyd-Vorkondensat, an üblichen Zusatzstoffen, wie Farbstoffe, Flammschutzmittel, UV-Stabilisatoren, Mittel zur Herabsetzung der Brandgastoxizität oder zur Förderung der Verkohlung zuzusetzen.

Es ist auch möglich, dem Melamin-/Formaldehyd-Vorkondensat Zusatzstoffe zuzusetzen. Die abrasiven Schaumstoffe enthalten in einer Ausführungsform mindestens einen Zusatzstoff aus der Gruppe der Farbstoffe, Duftstoffe, optischen Aufheller, UV-Absorbern und Pigmente. Dieser Zusatzstoff ist bevorzugt homogen in dem Schaumstoff verteilt.

Als Pigmente können die gängigen anorganischen natürlichen (z.B. Kreide) oder synthetischen Pigmente (z.B. Titanoxide), aber auch organische Pigmente eingesetzt werden.

Das Einbringen des schäumfähigen Reaktivharzes (Schritt 2) in das Trägermaterial kann nach allen dem Fachmann bekannten Methoden erfolgen, beispielsweise durch Tränken des Trägermaterials mit schäumfähigem Reaktivharz. Alternativ kann (die Oberfläche) das Trägermaterial auch mit schäumfähigem Reaktivharz besprüht werden und gegebenenfalls anschließend in das Trägermaterial eingerollt oder eingewalzt werden (WO-A-2009/077616). Normalerweise wird das schäumfähige Reaktivharz möglichst gleichmäßig aufgetragen. Das erfindungsgemäße Verfahren kann derart durchgeführt werden, dass das Trägermaterial vollständig in die Tränklösung enthaltend das schäumfähige Reaktivharz eingetaucht wird oder es wird nur eine flächige Seite des Trägermaterials eingetaucht.

In einer bevorzugten Ausführungsform kann man eine Kombination aus offenzelligen Schaumstoff und einem Melamin-/Formaldehydharzschaum bevorzugt diskontinuierlich herstellen.

Hierzu kann in einer Schäumvorrichtung mit variablen Druckeinstellungen die Lösung oder Dispersion enthaltend ein Vorkondensat aus Schritt (1) mit dem Trägermaterial kombiniert werden. Es sind unterschiedliche Kombinationen möglich:
1. Das Trägermaterial wird vorgelegt und das schäumfähige Reaktivharz wird möglichst gleichmäßig aufgetragen
2. Das Trägermaterial wird mit dem schäumfähigen Reaktivharz getränkt und dann in die Schaumform gegeben
3. Das Melamin-/Formaldehydharz wird vorgelegt und das Trägermaterial wird dann zugegeben.

In einer weiteren bevorzugten Ausführungsform kann man eine Kombination aus Trägermaterial und einem Melamin-/Formaldehydharzschaum bevorzugt in einem kontinuierlichen Verfahren herstellen.

Die Kombination aus Trägermaterial und Melamin-/Formaldehydharz kann auf unterschiedliche Weise erfolgen. Dabei kann das Trägermaterial über eine Endlosrolle der Schäumvorrichtung zugeführt werden. Es kann zuvor eine Komprimierung des Trägermaterials erfolgen, so dass dieses beim Aufschäumen mit dem Melamin-/Formaldehydharz die volle Schaumhöhe (d.h. ursprüngliche Dicke des Trägermaterials) erreicht. Des Weiteren kann das Trägermaterial beim Verschäumen expandiert werden, so dass dieses entlang der Schaumrichtung reißt und somit die ursprüngliche Verbundstruktur verliert.
1. Das Trägermaterial kann über dem Boden der Schäumvorrichtung zugeführt werden. Das Trägermaterial kann beispielsweise unter Verwendung eines Klettbandes an der Unterseite der Schäumvorrichtung fixiert werden. Die Maische kann von oben auf das Trägermaterial aufgebracht werden.
2. Das Trägermaterial kann oberhalb des Melamin-/Formaldehydharzes in die Schäumvorrichtung geführt werden, so dass das das Melamin-/Formaldehydharz das Trägermaterial beim Aufschäumen durchdringen (und expandieren) kann.
3. Das Melamin-/Formaldehydharz kann direkt in das Trägermaterial eingespritzt und eingewalzt werden. Durch das Walzen kann beispielsweise überschüssiges schäumfähiges Reaktionsharz wieder entfernt werden, bis die gewünschte Menge an schäumfähigem Reaktionsharz im Trägermaterial vorliegt.

Im Verfahrensschritt (3) erfolgt ein Erwärmen zum Aufschäumen des Vorkondensates und ggf. des Trägermaterials. Durch ein Erhitzen der Lösung oder Dispersion aus Schritt (2) auf eine Temperatur oberhalb des Siedepunktes des verwendeten Treibmittels, kann ein Schaumstoff erhalten werden. Die genau anzuwendende Temperatur hängt auch vom eingesetzten Treibmittel (z.B. von dessen Siedepunkt) ab. Das Erhitzen in Schritt (3) kann z.B. durch die Verwendung heißer Gase (wie Luft oder Inertgase) und/oder eine Hochfrequenzbestrahlung (z. B. Mikrowellen) erfolgen.

Bevorzugt kann der Energieeintrag durch elektromagnetische Strahlung erfolgen, beispielsweise durch Hochfrequenzbestrahlung mit 5 bis 400 kW, bevorzugt 5 bis 200 kW, besonders bevorzugt 9 bis 120 kW pro Kilogramm der eingesetzten Mischung in einem Frequenzbereich von 0,2 bis 100 GHz, bevorzugt 0,5 bis 10 GHz. Als Strahlungsquelle für dielektrische Strahlung sind Magnetrone geeignet, wobei mit einem oder mehreren Magnetronen gleichzeitig bestrahlt werden kann.

Die hergestellten Schaumstoffe werden abschließend getrocknet, wobei im Schaumstoff verbliebenes Wasser und Treibmittel entfernt wird.

Die Eigenschaften des dabei hergestellten Hybridschaumes ergeben sich aus dem eingesetzten schäumfähigen Melamin-Formaldehyd-Harz und der eingestellten Rohdichte des Trägermaterials.

Die erfindungsgemäß hergestellten Melaminharzschaumstoffe weisen in der Regel eine Dichte von 5 bis 100 g/l, besonders bevorzugt 10 bis 50 g/l auf.

Weiterhin kann der Hybridschaum zusätzlich Additive enthalten. Als Additive eignen sich beispielsweise Flammschutzmittel wie intumeszierende Massen, Alkalisilikate, Melamin, Melaminpolyphosphat, Melamincyanurat, Aluminiumhydroxid, Magnesiumhydroxid, Ammoniumpolyphosphate, organische Phosphate oder auch flammschützende Halogenverbindungen. Ebenso sind Weichmacher, Keimbildner, IR-Absorber wie Ruß und Graphit, Aluminiumoxidpulver oder Al(OH)₃, lösliche und unlösliche Farbstoffe, Biozid wirksame Substanzen (wie Fungizide) und Pigmente als Additive geeignet.

Gegebenenfalls kann der Hybridschaum auch mit weiteren organischen oder anorganischen Partikeln verstärkt werden. Solche Partikel werden vorzugsweise in Abmischung mit dem schäumfähigen Reaktivharz eingebracht. Geeignete verstärkende Füllstoffe sind beispielsweise: Kurzglasfasem, Talkum, Kreide oder andere Mineralien, Nanotubes, Schichtsilikate oder Kohlenstoff-Fasern. Diese Zusätze können bereits in das Trägermaterial einbracht werden.

Die erfindungsgemäßen Melaminharzschäume finden Anwendung in der Bepolsterung von Sitzflächen, als Wärme-, Kälte- und/oder Schallschutz bzw. Dämmung bzw. Isolierung von Gebäuden und Gebäudeteilen, insbesondere von Wänden, Zwischenwänden, Dächern, Fassaden, Türen, Decken und Fußböden, von Fahrzeugen aller Art zu Land, zu Wasser, in der Luft und im All sei es zur Lasten- oder zur Personenbeförderung oder einer derartigen Kombination in Personenkraftwagen, Lastkraftwagen, z.B. zur Isolierung des Motorraumes (wie Motorhauben) oder Fahrgastzellen, beim Schienenverkehr in den Wagons im Güter oder Personenverkehr sowie in Lokomotiven, in Luftfahrzeugen z.B. im Kabineninnenraum, dem Cockpit oder im Frachtraum sowie in der Raumfahrt in bemannten oder unbemannten Flugobjekten wie Raumschiffen und Raumgleitern, Raumkapseln oder Satelliten, zur Tieftemperaturisolierung z.B. von Kühlaggregaten, Kühlschränken, Kühlhäusern, Tankanlagen und Behälter für beliebige Flüssigkeiten, insbesondere für Öl und Gas bzw. Flüssiggas bis (-278°C), zur Lagerung und im Transport, zur Aufnahme und reversible oder teilreversiblen Abgabe von Flüssigkeiten bis (-273°C) als "Schwamm", in der Reinigungsindustrie für in der Reinigung von Flächen z.B. in Form von Schwämmen oder getränkt mit Reinigungsmitteln aller Art u.a. für Waschvorgänge in Wasch(voll)automaten, als stoßdämmendes oder stoßdämpfendes Verpackungsmaterial, in Hygieneanwendungen (Windeln, Binden) sowie im Textilbereich (Kleidung).

Beispiele für die Verwendung von Melamin-/Formaldehydharzschäumen in Hygieneanwendungen finden sich beispielsweise in WO-A-02/26872 und WO-A-02/26871.

In einer speziellen Ausführungsform des erfindungsgemäßen Verfahrens kann das schäumfähige Reaktivharz enthaltenden Trägermaterials (Hybridschaum) druckverformt werden. Thermoverformungen von Melaminharzschaumstoffen sind bereits aus EP-A-111 860 bekannt.

Verfahren zur Herstellung von dreidimensionalen Formkörpern aus offenzelligen, elastischen, duroplastischen Schaumstoffen, wobei man den Schaumstoff entweder a) für einen Zeitraum von 0,1 bis 120 min bei einer Temperatur von 100 bis 180°C mit Wasserdampf beaufschlagt oder mit Wasser kocht und anschließend unter einem Druck von 0,1 bis 100 bar und bei einer Temperatur von 20 bis 280°C verformt, oder b) bei einem Druck von 1,5 bis 15 bar verformt und anschließend im verformten Zustand für einen Zeitraum von 0,1 bis 60 min bei einer Temperatur von 100 bis 180°C mit Wasserdampf beaufschlagt.

Unter dem Begriff "Druckverformung" oder "Druckverformungsschritt" wird im Rahmen der vorliegenden Erfindung das Behandeln des das schäumfähige Reaktivharz enthaltenden Trägermaterials (Hybridschaum) bei erhöhtem Druck und erhöhter Temperatur verstanden. Dabei wird ein geeignetes, dem Fachmann bekanntes, vorzugsweise beheizbares Werkzeug verwendet, dessen Form die Formgebung des herzustellenden Formteils festlegt. Dabei können beispielsweise durch so genannte "Einleger" oder Werkzeuge mit speziell geformten Oberflächen Werkstücke (Formteile) mit unterschiedlichstem Aussehen und/oder Dicken hergestellt werden.

Unter erhöhtem Druck wird jeder Druck größer als der Atmosphärendruck (1 bar) verstanden. Dieser Schritt wird erfindungsgemäß normalerweise so durchgeführt, dass das erhaltene Trägermaterial, dass das schäumfähige Reaktivharz enthält, in eine geeignete Form eingelegt wird, worauf Druck angelegt wird. In einer bevorzugten Ausführungsform der vorliegenden Erfindung wird der Druckverformungsschritt bei erhöhter Temperatur durchgeführt. In dieser bevorzugten Ausführungsform wird auch als "Thermoform-Schritt" bezeichnet. Dabei gilt prinzipiell, dass je höher die in eingesetzte Temperatur ist, umso geringer ist die Verweilzeit des das schäumfähige Reaktivharz enthaltenen Trägermaterials in der Form.

Vorzugsweise wird die Druckverformung bei einer Temperatur von 50 bis 200°C und/oder einem Druck von 2 bis 200 bar durchgeführt. Je nach eingesetztem System kann das fertige Teil nach einigen Minuten, beispielsweise nach 0,5 bis 2 Minuten, entnommen werden. Gegebenenfalls kann der Druckverformungsschritt auch über einen längeren Zeitraum durchgeführt werden.

Bei den Formteilen handelt es sich in der Regel um Formteile jeglicher Größe, Ausdehnung und Form, die mit Formen herstellbar sind wie Sterne, Kugel, Würfel, Quader, Ringe, Zylinder, Hohlzylinder, Halbschalen, Stränge, beispielsweise für Verschalungen, Polster, Rotoren, Tragflächen und Rümpfe für Luft- und Raumfahrzeuge, für Fahrgastzellen und deren Innenausstattung in PKW, LKW, Bussen und jeglicher Art von Nutzfahrzeugen, vorzugsweise um flächige Formteile, also solche Formteile, bei denen die dritte Dimension (Dicke) kleiner ist als die erste (Länge) und zweite (Breite) Dimension.

Weiterhin betrifft die vorliegende Erfindung Paneelen enthaltend solche Formteile sowie die Verwendung dieser Formteile bzw. der Paneelen im Fahrzeugbau, inklusive Flugzeugbau, Eisenbahnbau oder als Brandschutzschicht, insbesondere als Leichtbauteile.

Die Materialeigenschaften der erhaltenen Formteile sind von dem Komprimierungsgrad, dem eingesetzten Trägermaterial, dem eingesetzten schäumfähigen Reaktivharz sowie dem Anteil des Reaktivharzes im Trägermaterial abhängig. Dabei können Teile mit einem nahezu unbegrenzten Spektrum an Eigenschaften hergestellt werden.

Die Formteile können automatisierbar hergestellt werden und verfügen in der Regel über bessere mechanische Eigenschaften. So zeichnen sich die erfindungsgemäßen Schäume und Formteile durch gute Druckfestigkeit und Weiterreißfestigkeit sowie eine hohe und beständige Verformbarkeit aus. Weiterhin weisen sie eine geringe Dichte sowie ein leichtes Gewicht und eine geringe Brennbarkeit auf, so dass sie auch als Brandschutzschicht eingesetzt werden können. Der besondere Vorteil der erfindungsgemäßen Formteile liegt darin begründet, dass sie durch das erfindungsgemäße Verfahren auf einfache Weise jede gewünschte Form annehmen können und diese Form gleichzeitig sehr beständig ist.

Durch einen Druckverformungsschritt ist die Dicke des fertigen (z.B. flächigen) Formteiles normalerweise kleiner oder maximal gleich der Dicke des eingesetzten Trägermaterials. Vorzugsweise hat das Formteil nach dem Druckverformen eine Dicke von ≤ 80 % im Vergleich zur Dicke des eingesetzten Trägermaterials. In einer Ausführungsform der vorliegenden Erfindung kann die Dicke des fertigen Formteiles auf 10 bis 50 % der Dicke des eingesetzten Trägermaterials reduziert werden.

Vor oder im Anschluss an die Druckverformung, vorzugsweise davor kann in einer Ausführungsform der vorliegenden Erfindung auf mindestens einer (flächigen) Seite des schäumfähigen Reaktivharz enthaltenden Trägermaterials eine Deckschicht aufgebracht werden. Sofern die Deckschicht vor der Druckverformung aufgebracht wird, wird sie auf eine oder mehrere (flächigen) Seiten (Oberflächen) des das schäumfähigen Reaktivharz enthaltenden Trägermaterials (Hybridschaum) aufgebracht. Sofern die Deckschicht nach der Druckverformung aufgebracht wird, wird sie auf eine Seite (Oberfläche) des fertigen Formteiles aufgebracht. Vorzugsweise wird auf den beiden gegenüberliegenden (flächigen) Seiten des das schäumfähigen Reaktivharz enthaltenden Trägermaterials jeweils eine Deckschicht aufgebracht. Dabei kann es sich sowohl um gleiche als auch um jeweils unterschiedliche Materialien handeln. Gegebenenfalls können auf mindestens eine oder auf zwei sich gegenüberliegenden Seiten des Hybridschaumes bzw. des fertigen Formteiles zwei oder mehr Deckschichten aufgebracht werden. Ein erfindungsgemäßes Formteil, das auf mindestens einer Seite (Oberfläche) des das schäumfähigen Reaktivharz enthaltenden Trägermaterials eine Deckschicht aufweist, wird als Paneele bezeichnet. Sofern sich jeweils eine Deckschicht an zwei sich gegenüberliegenden Seiten des das schäumfähigen Reaktivharz enthaltenden Trägermaterials befindet, spricht man von einer Sandwich-Paneele.

Als Deckschicht eignen sich prinzipiell alle dem Fachmann bekannten Deckschichten. Vorzugsweise besteht die Deckschicht vollständig oder zumindest teilweise aus Metall, insbesondere Aluminium, Holz, Isoliermaterial, Kunststoffen, beispielsweise als Kunststofffolien oder Kunststoffplatten, Wellblech, Metallblechen, Glasfasergewebe, Glasfasermatten, Gips oder Pressspanplatten. Sofern eine Deckschicht aus Holz verwendet wird, ist sie vorzugsweise aus Furnierholz, Deckschichten aus Kunststoff umfassen auch Polyurethan-Schäume. Mehr bevorzugt ist die Deckschicht aus Aluminium, Metallblechen, Glasfasergewebe, Kunststofffolien, Kunststoffplatten oder Furnierholz, besonders bevorzugt aus Aluminium. Vorzugsweise ist die Deckschicht eine Folie, Glasfasermatte oder beides.

Vorzugsweise wird die Deckschicht auf das das schäumfähige Reaktivharz enthaltenen Trägermaterial aufgebracht, nachdem dieses ausgewalzt wurde. Vorzugsweise ist die Schichtdicke der Deckschicht kleiner als die Dicke des Trägermaterials, vorzugsweise mindestens um den Faktor 10 kleiner. Geeignete Deckschichten sind beispielsweise eine 0,1 mm dicke Folie aus Aluminium. Vorzugsweise wird im nachfolgenden Schritt der Druckverformung das mindestens eine Deckschicht umfassende Formteil auf ≤ 80 % der Ausgangsdicke des Trägermaterials komprimiert. Die Haftung zwischen Hybridschaum und Deckschicht resultiert normalerweise durch das bei der Komprimierung aus dem Schaum austretende schäumfähige Reaktivharz.

Ein weiterer Gegenstand der vorliegenden Erfindung ist eine Paneele enthaltend mindestens ein erfindungsgemäßes Formteil herstellbar durch ein Verfahren gemäß der vorstehenden Beschreibung. Im Rahmen der vorliegenden Erfindung werden unter dem Begriff "Paneele" insbesondere solche Gegenstände verstanden, die ein Formteil (Kern) aufweisen und auf dieses Formteil ist auf mindestens einer (flächigen) Seite eine Deckschicht aufgebracht. Paneelen können gerade (unverbogen) sein oder eine (oder gegebenenfalls mehrere) Krümmung aufweisen (gebogen). Weiterhin können Paneelen auch strukturiert sein. Vorzugsweise ist die Paneele eine Sandwich-Paneele, in der auf sich zwei sich gegenüberliegenden (flächigen) Seiten des Formteiles jeweils eine Deckschicht aufgebracht ist. Geeignete Deckschichten wurden vorstehend bereits aufgeführt. Gegebenenfalls können die beiden Deckschichten aus unterschiedlichen Materialien sein, vorzugsweise sind sie aus den gleichen Materialien. Insbesondere sind die beiden Deckschichten ausgewählt aus Aluminium, Metallblechen, Glasfasergeweben, Glasfasermatten, Kunststofffolien, Kunststoffplatten oder Furnierholz.

Ein weiterer Gegenstand der vorliegenden Erfindung ist ein Verfahren zur Herstellung solcher Paneele enthaltend mindestens ein erfindungsgemäßes Formteil. Das Verfahren zur Herstellung der Paneelen entspricht prinzipiell dem vorstehend beschriebenen Verfahren zur Herstellung der erfindungsgemäßen Formteile.

Beim Verformen und Aushärten der Formteile wird nicht nur eine kraftschlüssige Verbindung zwischen Deckschichten und Schaumstoffkern hergestellt, sondern die Deckschichten können auch gemeinsam mit dem Schaumkern verformt werden.

Ein weiterer Gegenstand der vorliegenden Erfindung ist die Verwendung der erfindungsgemäßen (flächigen) Formteile im Fahrzeugbau oder auch als Brandschutzschicht. Vorzugsweise werden die erfindungsgemäßen Formteile im Fahrzeugbau verwendet, insbesondere bei PKW, LKW, Busse, Land-, Forst- und Baumaschinen, Luftfahrzeugen wie Flugzeugen und Zeppelinen, im Bau von Luft- und Raumfahrzeugen oder Schienenfahrzeugen wie Eisenbahnen. Der besondere Vorteil bei der Verwendung der erfindungsgemäßen Formteile im Fahrzeugbau ist darin begründet, dass sie aufgrund des Herstellungsverfahrens, insbesondere durch den Thermoform-Schritt auf einfache Weise zu beliebigen Formen verformt werden können. Diese Formen wiederum sind sehr beständig, verfügen über hervorragende mechanische Eigenschaft sowie eine geringe Brennbarkeit. Ein weiterer Gegenstand der vorliegenden Erfindung ist die Verwendung eines Paneels enthaltend ein erfindungsgemäßes Formteil im Fahrzeugbau, insbesondere bei Flugzeugen oder Eisenbahnen, oder als Brandschutzschicht. Des Weiteren können die erfindungsgemäßen Schäume und Formteile als schallabsorbierende Paneele im Bauwesen eingesetzt werden. Darüber hinaus eignen sich die erfindungsgemäßen Schäume zur Energieabsorption im Verpackungssektor.

### Beispiele

### Beispiel 1

### Herstellung eines mit einem Polyester (PET)-Faservlies modifizierten Schaumstoffes

75 Gew.-Teile eines sprühgetrockneten Melamin-/Formaldehyd-Vorkondensates (Molverhältnis 1:3) wurden in 25 Gew.-Teilen Wasser gelöst. Dieser Harzlösung wurden 3 Gew.-% Ameisensäure, 2 Gew.-% eines Na-C12/C14-Alkylsulfats, 20 Gew.-% Pentan, jeweils bezogen auf das Harz, zugesetzt.

Ein Polyester-Faservlies (Dichte 800 g/m², 25 Gew.-% bezogen auf das Harz) wurde mit dem wässrigen Melamin/Formaldehyd-Gemisch getränkt, anschließend in einer Form (zum Schäumen) aus Polypropylen durch Einstrahlung von Mikrowellenenergie verschäumt. Nach dem Verschäumen wurde 30 Minuten getrocknet.

Die Ergebnisse sind in Tabelle 1 zusammengestellt.

### Beispiel 2

Herstellung eines mit einem retikulierten PU-Schaumstoff modifizierten Schaumstoffes 75 Gew.-Teile eines sprühgetrockneten Melamin-/Formaldehyd-Vorkondensates (Molverhältnis 1:3) wurden in 25 Gew.-Teilen Wasser gelöst. Dieser Harzlösung wurden 3 Gew.-% Ameisensäure, 2 Gew.-% eines Na-C12/C14-Alkylsulfats, 20 Gew.-% Pentan, jeweils bezogen auf das Harz, zugesetzt.

Das wässrige Melamin/Formaldehyd-Harzgemisch wurde in einer Form (zum Schäumen) aus Polypropylen gegebenen, anschließend ein offenzelliger PU-Schaumstoff (Dichte 30 g/l) auf die Maische gelegt. Durch Einstrahlung von Mikrowellenenergie wird verschäumt. Nach dem Verschäumen wurde 30 Minuten getrocknet.

Die Ergebnisse sind in Tabelle 1 zusammengestellt.

### Vergleichsbeispiel A

75 Gew.-Teile eines sprühgetrockneten Melamin-/Formaldehyd-Vorkondensates (Molverhältnis 1:3) wurden in 25 Gew.-Teilen Wasser gelöst. Dieser Harzlösung wurden 3 Gew.-% Ameisensäure, 2 Gew.-% eines Na-C12/C14-Alkylsulfats, 20 Gew.-% Pentan, jeweils bezogen auf das Harz, zugesetzt. Anschließend wurde gerührt und dann in einer Form (zum Schäumen) aus Polypropylen durch Einstrahlung von Mikrowellenenergie verschäumt. Nach dem Verschäumen wurde 30 Minuten getrocknet.

Die Ergebnisse sind in Tabelle 1 zusammengestellt.

**Tabelle 1**

| | Dichte [g/l] | Stempeldruckwerte [N/kN] | Weiterreißfestigkeit DIN ISO 34-1:04-07 Methode B [N] |
|---|---|---|---|
| Beispiel 1 | 13 | 66,7 | 3,48 |
| Beispiel 2 | 39 | 47,2 | 9,02 |
| Vergleichsbeispiel A | 8 | 34,7 | 2,07 |

### Stempeldruckmessung

Zur Beurteilung der mechanischen Güte der Melaminharzschaumstoffe wurde eine Stempeldruckmessung gemäß US-A-4 666 948 durchgeführt. Dabei wurde ein zylindrischer Stempel mit einem Durchmesser von 8 mm und einer Höhe von 10 cm in eine zylindrische Probe mit dem Durchmesser von 11 cm und einer Höhe von 5 cm in Schäumrichtung bei einem Winkel von 90°C gedrückt bis die Probe reißt. Die Durchreißkraft [N/kN] gibt Auskunft über die Güte des Schaumstoffs.

## Patentansprüche

1. Hybridschaum, enthaltend ein Trägermaterial und einen aus schaumfähigen Reaktivharzen hergestellten Schaum, herstellbar indem man das schaumfähige Reaktivharz in das Trägermaterial einbringt und bei Temperaturen oberhalb der Siedetemperatur des Treibmittels aufschäumt und gegebenenfalls tempert, **dadurch gekennzeichnet, daß** man als Trägermaterialien Polyurethanharze. Polyesterharze, Epoxide oder deren Gemische oder mineralische, tierische, pflanzliche und chemische, natürliche oder synthetische, Fasern sowie Vliesstoffe und Gewebematerialien aus diesen Fasern einsetzt, und daß die schaumfähigen Reaktivharze ein Melamin-/Formaldehydharz umfassen.

2. Hybridschaum nach Anspruch 1, **dadurch gekennzeichnet, daß** das Trägermaterial geschäumt ist und ausgewählt ist aus der Gruppe bestehend aus Polyurethanharzen, Polyesterharzen, Epoxiden oder deren Gemischen.

3. Verfahren zur Herstellung von Hybridschäumen nach Ansprüchen 1 bis 2, **dadurch gekennzeichnet, dass** man das schaumfähige Reaktivharz in das Trägermaterial einbringt, bei Temperaturen oberhalb der Siedetemperatur des Treibmittels aufschäumt und gegebenenfalls tempert.

4. Verwendung der Hybridschäume nach einem der Ansprüche 1 bis 2 als Polsterung und zum Wärme-, Kälte- und Schallschutz.

5. Verwendung der Hybridschäume nach einem der Ansprüche 1 bis 2 im Fahrzeugbau für PKW, LKW, Busse, Land- und Baumaschinen, Schienenfahrzeugen und im Bau von Luft- und Raumfahrzeugen.

6. Verwendung der Hybridschäume nach einem der Ansprüche 1 bis 2 in Paneelen im Fahrzeugbau für PKW, LKW, Busse, Land- und Baumaschinen, Schienenfahrzeugen und im Bau von Luft- und Raumfahrzeugen.

## Claims

1. A hybrid foam comprising a support material and a foam produced from foamable reactive resins, preparable by introducing the foamable reactive resin into the support material and foaming at temperatures above the boiling temperature of the blowing agent, and heat treatment being carried out optionally, wherein polyurethane resins, polyester resins, epoxides or mixtures thereof, or mineral, animal, vegetable and chemical, natural or synthetic fibers, and also nonwovens and woven materials comprising these fibers, are used as support materials, and wherein the foamable reactive resins comprise a melamine/formaldehyde resin.

2. The hybrid foam according to claim 1, wherein the support material is foamed and selected from the group consisting of polyurethane resins, polyester resins, epoxides or mixtures thereof.

3. A process for producing hybrid foams according to claims 1 to 2, wherein the foamable reactive resin is introduced into the support material and is foamed at temperatures above the boiling temperature of the blowing agent, and heat treatment is carried out optionally.

4. The use of the hybrid foams according to either of claims 1 and 2 as cushioning and for heat, cold and sound protection.

5. The use of the hybrid foams according to either of claims 1 and 2 in vehicle construction for automobiles, trucks, buses, agricultural and construction machinery, rail vehicles, and in the construction of aircraft and space vehicles.

6. The use of the hybrid foams according to either of claims 1 and 2 in panels in vehicle construction for automobiles, trucks, buses, agricultural and construction machinery, rail vehicles, and in the construction of aircraft and space vehicles.

## Revendications

1. Mousse hybride, contenant un matériau de support et une mousse produite à partir de résines réactives expansibles, pouvant être produite en introduisant dans le matériau de support la résine réactive expansible et en la soumettant à une expansion à des températures supérieures à la température d'ébullition de l'agent d'expansion et éventuellement à un traitement thermique, **caractérisée en ce qu'**on utilise comme matériaux de support des résines polyuréthane, des résines polyester, des époxydes ou des mélanges de tels matériaux ou des fibres minérales, animales, végétales et chimiques, naturelles ou synthétiques ainsi que des non-tissés et matériaux tissés à base de ces fibres, et **en ce que** les résines réactives expansibles comprennent une résine mélamine/formaldéhyde.

2. Mousse hybride selon la revendication 1, **caractérisée en ce que** le matériau de support est expansé et est choisi dans le groupe constitué par des résines polyuréthane, des résines polyester, des époxydes ou des mélanges de tels matériaux.

3. Procédé pour la production de mousses hybrides selon les revendications 1 et 2, **caractérisé en ce qu'**on introduit dans le matériau de support la résine réactive expansible, on la soumet à une expansion à des températures supérieures à la température d'ébullition de l'agent d'expansion et éventuellement à un traitement thermique.

4. Utilisation des mousses hybrides selon la revendication 1 ou 2 en tant que rembourrage et pour la protection contre la chaleur, le froid et le bruit.

5. Utilisation des mousses hybrides selon la revendication 1 ou 2 dans la construction de véhicules pour automobiles, camions, autobus, machines agricoles et de génie civil, véhicules sur rail et dans la construction d'aéronefs et de véhicules spatiaux.

6. Utilisation des mousses hybrides selon la revendication 1 ou 2 dans des panneaux dans la construction de véhicules pour automobiles, camions, autobus, machines agricoles et de génie civil, véhicules sur rail et dans la construction d'aéronefs et de véhicules spatiaux.
